# EUROPEAN PATENT APPLICATION

(11) **EP 4 776 501 A1**
(43) Date of publication of application: **15.07.2026**
(21) Application number: 24862603.8
(22) Date of filing: 22.08.2024
(51) Int. Cl.: H02M 3/155

(54) **DC-TO-DC CONVERTER**

(30) Priority: 07.09.2023 JP 2023145569
(71) Applicant: Panasonic Intellectual Property Management Co., Ltd., Kadoma-shi, Osaka 571-0057 (JP)
(72) Inventor: YAMAMOTO, Shota, Kadoma-shi, Osaka 571-0057 (JP); ISHITSUKA, Tetsuya, Kadoma-shi, Osaka 571-0057 (JP)
(74) Representative: Novagraaf International SA
(86) International application number: PCT/JP2024/029825
(87) International publication number: WO 2025/052950

(57) **Abstract**

A controller of an H-bridge type buck-boost DC-DC converter is configured to turn on a fourth switching element when a current detection value obtained by detecting a current flowing through a reactor is within a value range of a boost reference signal at beginning of one switching cycle, and then, turn off the fourth switching element when the current detection value becomes equal to the boost reference signal, and turn off a third switching element fixedly when the current detection value is less than a certain value, and cause the third switching element to operate complementarily with the fourth switching element when the current detection value is equal to or more than the certain value. The H-bridge type buck-boost DC-DC converter enhances conversion efficiency and prevents backflow.

## Description

### Technical Field

The present disclosure relates to a DC-DC converter with buck-boost capability.

### Background Art

DC-DC converters includes an H-bridge type buck-boost DC-DC converter capable of seamlessly switching between a boost operation and a buck operation (for example, see PTL 1). The H-bridge type buck-boost DC-DC converter is often used for DC power sources, such as storage batteries and solar batteries, having voltage fluctuation.

Generally, when a boost operation is performed by the H-bridge type buck-boost DC-DC converter, the high-side switching element of the input side is fixedly turned on and the low-side switching element of the input side is fixedly turned off, and control is performed using the ratio of the on period to the off period of the low-side switching element of the output side. In this control, generally, a high-side switching element of the output side is turned on to perform synchronous rectifying, or is turned off to perform diode rectifying.

### CITATION LIST

### Patent Literature

PTL 1: Japanese Patent Laid-Open Publication No. 2000-166223

### Summary of Invention

The synchronous rectifying enhances efficiency with less loss, compared to the diode rectifying, but has a risk of backflow of current.

A DC-DC converter according to an aspect of the present disclosure includes: a first arm configured to be connected in parallel to a direct-current (DC) power source, the first arm including a first switching element and one of a second switching element and a second rectifying element, the first switching element being connected to the one of the second switching element and the second rectifying element at a first node; a second arm configured to be connected in parallel to a DC bus and a smoothing capacitor, the second arm including a third switching element and a fourth switching element which are connected in series to each other at a second node; a reactor connected to the first node of the first arm and the second node of the second arm; and a controller configured to control the first switching element, the second switching element, the third switching element, and the fourth switching element or to control the first switching element, the third switching element, and the fourth switching element. A diode is connected or formed in antiparallel to each of the first switching element, the second switching element, the third switching element, and the fourth switching element, or to each of the first switching element, the third switching element, and the fourth switching element. The controller is configured to: generate a boost reference signal with a sawtooth waveform, the boost reference signal being obtained by adding a slope compensation to an error signal corresponding to a difference between a reference value and one of an output voltage or an output current to the DC bus; and turn on the fourth switching element when a current detection value obtained by detecting a current flowing through the reactor is within a value range of the boost reference signal at beginning of the one switching cycle, and then, turn off the fourth switching element when the current detection value becomes equal to the boost reference signal, and control the third switching element to turn off the third switching element fixedly when the current detection value is less than a certain value, and cause the third switching element to operate complementarily with the fourth switching element when the current detection value is equal to or more than the certain value.

According to the present disclosure, the H-bridge type buck-boost DC-DC converter enhances conversion efficiency while preventing backflow.

### BRIEF DESCRIPTION OF DRAWINGS

FIG. 1 is a schematic diagram of an H-bridge type buck-boost DC-DC converter according to an exemplary embodiment.
FIG. 2 is a circuit diagram of a controller according to a comparative example (a voltage mode).
FIG. 3 is a circuit diagram of a circuit of a controller according to the embodiment (a peak current mode).
FIG. 4 is a timing chart of a current detection value, a buck reference signal, a boost reference signal, and gate-source voltages of first to fourth switching elements of the H-bridge type buck-boost DC-DC converter according to the embodiment for explaining a basic operation of the converter.
FIGS. 5(a) and 5(b) schematically illustrate current flows in a boost operation.
FIGS. 6(a) and 6(b) schematically illustrate current flows in a buck operation.
FIGS. 7(a) and 7(b) schematically illustrate a reverse current flow from an output side to an input side.
FIG. 8 is a timing chart of a current detection value, a buck reference signal, a boost reference signal, and gate-source voltages of first to fourth switching elements when the third switching element is fixedly turned off.
FIG. 9 is a timing chart of a current detection value, a buck reference signal, a boost reference signal, and gate-source voltages of first to fourth switching elements when a reverse current is generated during the boost operation.
FIG. 10 is a timing chart of a current detection value, a buck reference signal, a boost reference signal, and gate-source voltages of first to fourth switching elements when a reverse current is generated during the buck operation.
FIG. 11 is a timing chart of a current detection value, a buck reference signal, a boost reference signal, and gate-source voltages of first to fourth switching elements when a countermeasure against the generation of reverse current according to the embodiment is implemented.
FIG. 12 is a timing chart of a current detection value, a buck reference signal, a boost reference signal, and gate-source voltages of first to fourth switching elements when the buck operation is performed at a light load without a delay in a current detection value.
FIG. 13 is a timing chart of a current detection value, a buck reference signal, a boost reference signal, and gate-source voltages of first to fourth switching elements when the buck operation is performed at a heavy load without a delay in a current detection value.
FIG. 14 is a timing chart of a current detection value, a buck reference signal, a boost reference signal, and gate-source voltages of first to fourth switching elements when the buck operation is performed at a light load with a delay in a current detection value.
FIG. 15 is a timing chart of a current detection value, a buck reference signal, a boost reference signal, and gate-source voltages of first to fourth switching elements when the buck operation is performed at a heavy load with a delay in a current detection value.
FIG. 16 is a timing chart of a current detection value, a buck reference signal, a boost reference signal, and gate-source voltages of first to fourth switching elements when a top of the value range of the boost reference signal is zero or more during the buck operation.
FIG. 17 is a timing chart of a current detection value, a buck reference signal, a boost reference signal, and gate-source voltages of first to fourth switching elements when the top of the value range of the boost reference signal is zero or more during the buck operation.
FIG. 18 is a schematic diagram of a buck-boost DC-DC converter according to a modification.

### DETAILED DESCRIPTION

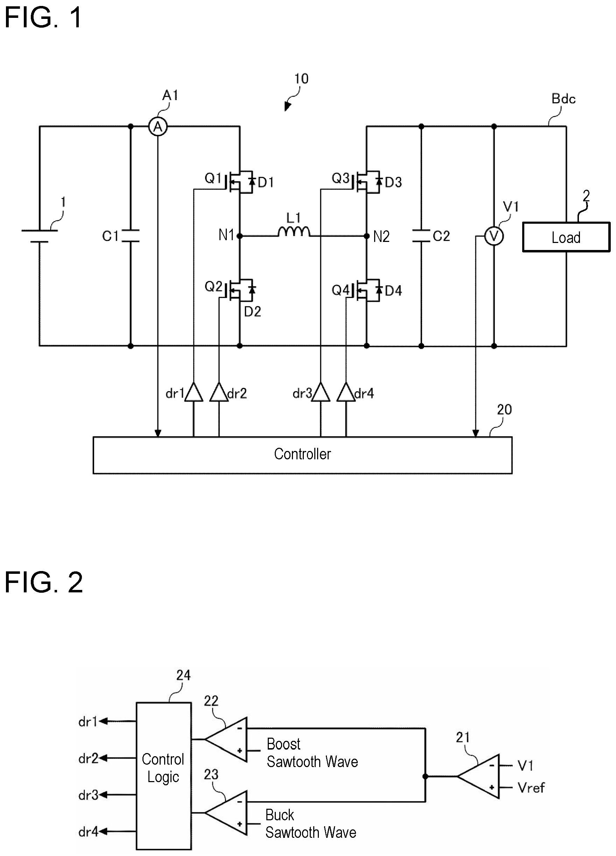

FIG. 1 is a schematic diagram of H-bridge type buck-boost DC-DC converter 10 according to an exemplary embodiment. Direct-current (DC) power source 1 is configured to be connected to an input side of buck-boost DC-DC converter 10, and DC bus Bdc is configured to be connected to an output side of buck-boost DC-DC converter 10. Load 2 is connected to DC bus Bdc. For example, load 2 may be a server or a storage in a data center. DC power source 1 may be a rechargeable battery. In this case, the rechargeable battery functions as a backup power source for servers and storage.

Buck-boost DC-DC converter 10 includes first capacitor C1, reactor L1, first to fourth switching elements Q1 to Q4, second capacitor C2, first to fourth driving circuits dr1 to dr4, and controller 20. For example, electrolytic capacitors may be used as first capacitor C1 and second capacitor C2. Metal-oxide-semiconductor field-effect-transistors (MOSFETs) or insulated gate bipolar transistors (IGBTs) can be used as first to fourth switching elements Q1 to Q4.

First capacitor C1 for smoothing is connected between a positive wiring and a negative wiring of DC power source 1. A first arm including first switching element Q1 and second switching element Q2 connected in series to each other is connected in parallel to DC power source 1 and first capacitor C1. Voltage sensor V1 and second capacitor C2 for smoothing are connected between a positive wiring and a negative wiring of DC bus Bdc. A second arm including third switching element Q3 and fourth switching element Q4 connected in series to each other is connected in parallel to DC bus Bdc and second capacitor C2.

First switching element Q1 functions as a high-side switching element for the buck operation, second switching element Q2 functions as a low-side switching element for the buck operation, third switching element Q3 functions as a high-side switching element for the boost operation, and fourth switching element Q4 functions as a low-side switching element for the boost operation.

Reactor L1 is connected between a middle point of the first arm (node N1 at which first switching element Q1 and second switching element Q2 are connected in series to each other) and a middle point of the second arm (node N2 at which third switching element Q3 and fourth switching element Q4 are connected in series to each other).

First to fourth diodes D1 to D4 as body diodes are formed or connected in antiparallel to first to fourth switching elements Q1 to Q4, respectively. In the case that N-channel MOSFETs are used as first to fourth switching elements Q1 to Q4, parasitic diodes formed in the source-to-drain direction may be used as first to fourth diodes D1 to D4. In the case that IGBTs are used as first to fourth switching elements Q1 to Q4, external diodes are connected as first to fourth diodes D1 to D4.

First to fourth driving circuits dr1 to dr4 produce driving signals for driving first to fourth switching elements Q1 to Q4 based on control signals for first to fourth switching elements Q1 to Q4 that ate input from controller 20 so as to drive first to fourth switching elements Q1 to Q4, respectively. In the case that the switching elements are MOSFETs, the driving circuits generate gate-source voltages and apply the gate-source voltages between gates and sources of the MOSFETs.

Current sensor A1 is configured to detect a current flowing through reactor L1 and output the detected current to controller 20. Current sensor A1 includes, for example, a shunt resistor and a current amplifier configured to amplify a voltage across the shunt resistor and output the resulting voltage. Current sensor A1 may include a Hall element and an amplifier configured to convert a magnetic field generated in the Hall element into a voltage. In FIG. 1, current sensor A1 is disposed in the positive wiring between DC power source 1 and first switching element Q1, but current sensor A1 may be disposed forward or backward of reactor L1.

Voltage sensor V1 is configured to detect an output voltage of buck-boost DC-DC converter 10 and output the detected voltage to controller 20. Voltage sensor V1 includes, e.g., a resistive voltage divider circuit.

Controller 20 performs pulse width modulation (PWM) control on first to fourth switching elements Q1 to Q4 according to the output voltage of buck-boost DC-DC converter 10 and the current flowing through reactor L1.

FIG. 2 is a circuit diagram of controller 20 according to a comparative example (a voltage mode). The voltage mode is a mode of feeding back only a voltage error signal with respect to a reference value. Error amplifier 21 amplifies the difference between an output voltage detected by voltage sensor V1 and reference voltage (target voltage) Vref, and outputs the amplified difference.

Boost-side comparator 22 is configured to compare the error voltage output from error amplifier 21 with a boost sawtooth wave (a ramp wave), and determine the pulse width of a PWM signal that controls fourth switching element Q4. When the error voltage is within the value range of the boost sawtooth wave and the error voltage is lower than the boost sawtooth wave, boost-side comparator 22 outputs a high-level signal. When the error voltage is higher than the boost sawtooth wave, boost-side comparator 22 outputs a low-level signal.

Buck-side comparator 23 is configured to compare the error voltage output from error amplifier 21 with a buck sawtooth wave, and determine the pulse width of a PWM signal that controls first switching element Q1. When the error voltage is within the value range of the buck sawtooth wave and the error voltage is higher than the buck sawtooth wave, buck-side comparator 23 outputs a high-level signal. When the error voltage is lower than the buck sawtooth wave, buck-side comparator 23 outputs a low-level signal.

Control logic circuitry 24 outputs, to fourth driving circuit dr4, the PWM signal output from boost-side comparator 22 for fourth switching element Q4, and outputs, to third driving circuit dr3, a PWM signal with a phase reverse to the PWM signal for fourth switching element Q4 output from boost-side comparator 22. Control logic circuitry 24 outputs, to first driving circuit dr1, the PWM signal for first switching element Q1 output from buck-side comparator 23, and outputs, to second driving circuit dr2, a PWM signal with a reverse phase obtained by inverting the PWM signal for first switching element Q1 output from buck-side comparator 23.

In buck-boost DC-DC converter 10, a certain overlap region is provided in the boost sawtooth wave and the buck sawtooth wave, so that it is possible to perform a buck-boost operation including both a buck operation and a boost operation in a region in which an input voltage is close to an output voltage. Thus, in the region in which the input voltage is close to the output voltage, the converter prevents chattering with frequent switching between the buck operation and the boost operation, thus providing seamless switching between the buck operation and the boost operation. However, in the voltage mode according to the comparative example, phase compensation is complicated because of the occurrence of a double pole caused by an LC filter including reactor L1 and second capacitor C2.

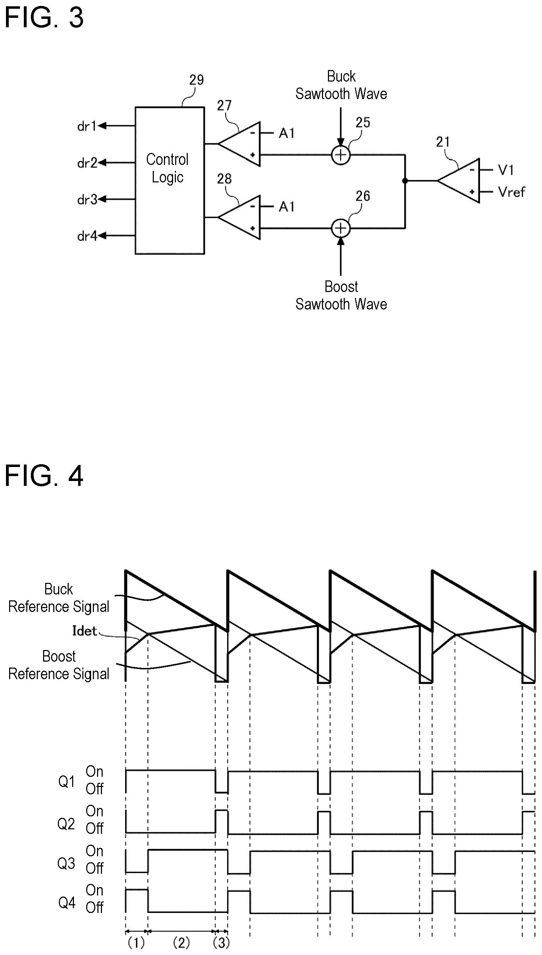

FIG. 3 is a circuit diagram of controller 20 according to the embodiment (a peak current mode). The peak current mode is a mode of feeding back a voltage error signal and a reactor current. Error amplifier 21 amplifies the difference between an output voltage detected by voltage sensor V1 and reference voltage Vref and outputs the amplified difference.

Buck-side adder 25 adds a buck sawtooth wave to the error voltage output from error amplifier 21 and outputs the resultant as a buck reference signal with a sawtooth waveform. Boost-side adder 26 adds a boost sawtooth wave to the error voltage output from error amplifier 21 and outputs the resultant as a boost reference signal with a sawtooth waveform. The buck sawtooth wave and the boost sawtooth wave are sawtooth waves that slope downward to the right (downslope). The buck sawtooth wave is a sawtooth wave obtained by shifting the boost sawtooth wave upward such that the lower part of the buck sawtooth wave includes a certain overlap region overlapping the upper part of the boost sawtooth wave. In these sawtooth waves, a rising and a downslope subsequent to the rising form a switching cycle in which the switching elements are switched based on a PWM signal. The switching cycle is repeated according to the sawtooth waves.

The width of the overlap region may be set by a designer. As the overlap region is wider, the input and output voltage range for the buck-boost operation is wider. For example, when the input and output voltages fluctuate during the buck-boost operation, the operation is stably performed without switching the operation mode. The overlap region with an excessively large width causes the efficiency of the buck-boost operation to be lower than that of the boost operation only or that of the buck operation only, thus increasing input and output voltage ranges in which the efficiency decreases.

Buck-side comparator 27 compares the buck reference signal output from buck-side adder 25 with a current value detected by current sensor A1 (hereinafter referred to as a current detection value), and determines the pulse width of the PWM signal that controls first switching element Q1. When the current detection value is within a value range of the buck reference signal and the current detection value is lower than the buck reference signal, buck-side comparator 27 outputs a high-level signal. Then, the current detection value increases. The, when the current detection value becomes equal to the buck reference signal after increasing, buck-side comparator 27 outputs a low-level signal.

Boost-side comparator 28 compares the boost reference signal output from boost-side adder 26 with the current detection value, and determines the pulse width of the PWM signal that controls fourth switching element Q4. When the current detection value is within the value range of the boost reference signal and the current detection value is lower than the boost reference signa, boost-side comparator 28 outputs a high-level signal. Then, the current detection value increases. Then, when the current detection value becomes equal to the boost reference signal after increasing, boost-side comparator 28 outputs a low-level signal.

Control logic circuitry 29 outputs, to first driving circuit dr1, the PWM signal for first switching element Q1 which has been output from buck-side comparator 27, and outputs, to second driving circuit dr2, a PWM signal with inverse phase obtained by inverting the PWM signal for first switching element Q1 which has been output from buck-side comparator 27. Control logic circuitry 29 outputs, to fourth driving circuit dr4, the PWM signal for fourth switching element Q4 which has been output from boost-side comparator 28, and, in principle, outputs, to third driving circuit dr3, a PWM signal with inverse phase to the PWM signal for fourth switching element Q4 which has been output from boost-side comparator 28. The PWM signal output to third driving circuit dr3 may be controlled to be fixedly at a low level.

The buck sawtooth wave or the boost sawtooth wave is added to the error voltage output from error amplifier 21 to reduce subharmonic oscillation occurring at a duty of 50% or higher determined by direct comparison between the current detection value and the error voltage. When the duty is 50% or higher, the slope of decrease in the current detection value is larger than the slope of increase in the current detection value, and the range of change in the current detection value between the cycles gradually increases, leading to oscillation. In accordance with the embodiment, a downslope is added to the error voltage to perform slope compensation. Even when the duty is 50% or higher, increase in on-time is reduced and oscillation is prevented.

Circuit function blocks illustrated in FIG. 2 and FIG. 3 may be implemented by digital control by a microcontroller. In this case, the output voltage detected by voltage sensor V1 and the current value detected by current sensor A1 are necessarily converted into digital values by an A/D converter.

In the peak current mode according to the embodiment, phase compensation is simplified since a double pole caused by an LC filter on the output side does not occur. Especially, the digital control significantly reduces the amount of calculation, compared to the voltage mode. In addition, the peak current mode is highly responsive to a sudden fluctuation in DC power source 1 and is suitable for the control of discharge from a storage battery that involves large voltage fluctuations.

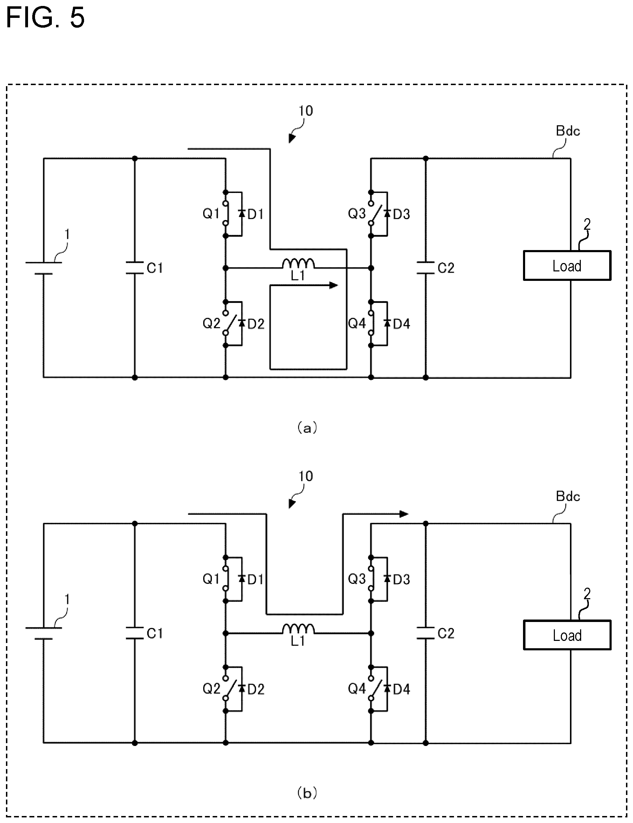

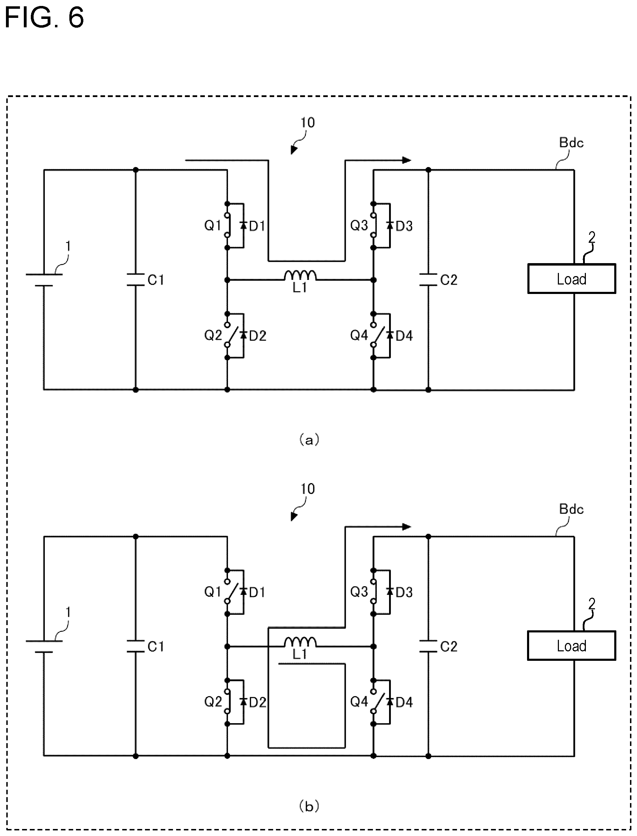

FIG. 4 illustrates a timing chart of the current detection value, the buck reference signal, the boost reference signal, gate-source voltages of first to fourth switching elements to explain a basic operation performed by H-bridge type buck-boost DC-DC converter 10 according to the embodiment. FIGS. 5(a) and 5(b) schematically illustrate a current flow in the boost operation. FIGS. 6(a) and 6(b) schematically illustrate a current flow in the buck operation.

In the buck operation performed by buck-boost DC-DC converter 10 (see FIGS. 6(A) and 6(b)), controller 20 is fixedly turned off fourth switching element Q4, and in principle, fixedly turn on third switching element Q3. Controller 20 causes first switching element Q1 and second switching element Q2 to operate complementarily with each other. When first switching element Q1 is turned on and second switching element Q2 is turned off, electric power is transmitted to the output side while reactor L1 is charged from DC power source 1 (transmission state, see period (2) in FIG. 4 and FIG. 6(a)). When first switching element Q1 is turned off and second switching element Q2 is turned on, DC power source 1 and reactor L1 are disconnected from each other, and electric power stored in reactor L1 is transmitted to the output side (commutation state, see period (3) in FIG. 4 and FIG. 6 (b)).

When the current detection value is within the value range of the buck reference signal at the beginning of one switching cycle, controller 20 turns on first switching element Q1 and turns off second switching element Q2 to control the converter to be in the transmission state. After that, when the current detection value becomes equal to the buck reference signal, controller 20 turns off first switching element Q1 and turns on second switching element Q2 to control the converter to be in the commutation state and keeps the commutation state until the one switching cycle is completed.

In the boost operation performed by buck-boost DC-DC converter 10 (see FIGS. 5(a) and 5(b)), controller 20 fixedly turns on first switching element Q1 and fixedly turns off second switching element Q2. In principle, controller 20 causes third switching element Q3 and fourth switching element Q4 to operate complementarily with each other. When fourth switching element Q4 is turned on and third switching element Q3 is turned off, power transmission from the input side to the output side is stopped and reactor L1 is charged from DC power source 1 (accumulation state, see period (1) in FIG. 4 and FIG. 5(a)). When fourth switching element Q4 is turned off and third switching element Q3 is turned on, electric power is transmitted to the output side from both DC power source 1 and reactor L1 (transmission state, see period (2) in FIG. 4 and FIG. 5 (b)).

When the current detection value is within the value range of the boost reference signal at the beginning of one switching cycle, controller 20 turns on fourth switching element Q4 and turns off third switching element Q3 to control the converter to be in the accumulation state. After that, when the current detection value becomes equal to the boost reference signal, controller 20 turns off fourth switching element Q4 and turns on third switching element Q3 to control the converter to be in the transmission state and keeps the transmission state until the one switching cycle is completed.

The buck-boost operation performed by buck-boost DC-DC converter 10 (see FIG. 4) allows both the buck operation and the boost operation. When the current detection value is within the value range of the buck reference signal and within the value range of the boost reference signal at the beginning of one switching cycle, controller 20 turns on first switching element Q1 and fourth switching element Q4 and turns off second switching element Q2 and third switching element Q3. After that, when the current detection value becomes equal to the boost reference signal, controller 20 turns off fourth switching element Q4 and turns on third switching element Q3 and keeps the state until the one switching cycle is completed. When the current detection value becomes equal to the buck reference signal, controller 20 turns off first switching element Q1 and turns on second switching element Q2 and keeps the state until the one switching cycle is completed.

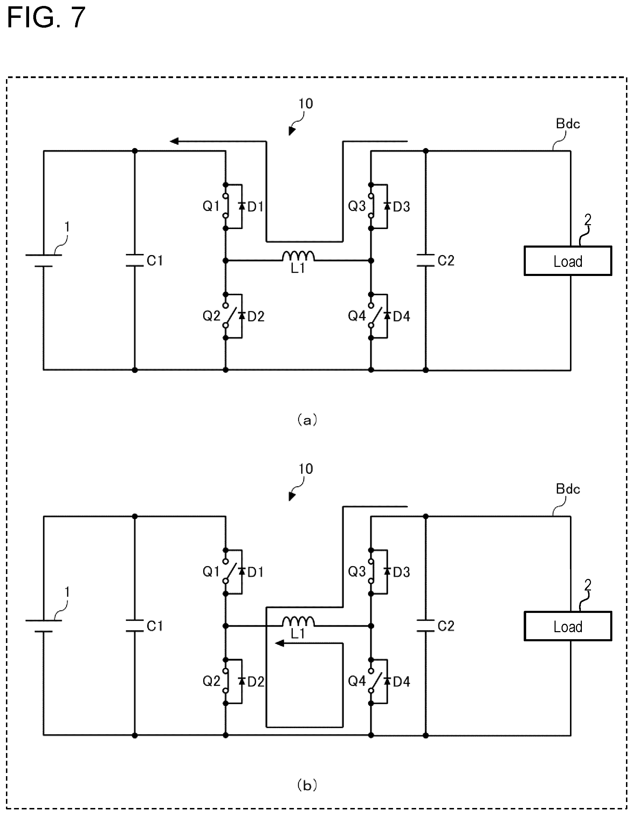

FIGS. 7(a) and 7(b) schematically illustrate the flow of a reverse current from the output side to the input side. FIG. 7(a) illustrates a reverse current generated in the transmission state of the boost operation. The voltage of DC power source 1 is lower than the voltage of DC bus Bdc during the boost operation. Therefore, when a current flowing from DC power source 1 to DC bus Bdc decreases, the risk of backflow arises.

FIG. 7(b) illustrates a reverse current generated in the commutation state of the buck operation. The voltage of DC power source 1 is higher than the voltage of DC bus BDC during the buck operation, and therefore, no reverse current is basically generated. Second capacitor C2 is connected to DC bus Bdc. From the viewpoint of second capacitor C2, first switching element Q1 and second switching element Q2 are boost converters. In the transmission state of the buck operation (the same as that in FIG. 7(a)), a risk of backflow of electric power from both capacitor C2 and reactor L1 to the input side arises.

Even if a large amount of electric power is not accumulated in second capacitor C2, when a charger is connected to DC bus Bdc or when another buck-boost DC-DC converter connected in parallel to buck-boost DC-DC converter 10 is connected to DC bus Bdc, a risk of backflow of electric power from the charger or the another buck-boost DC-DC converter arises.

Backflow to a rechargeable battery is avoided even for a short time of a millisecond order because the backflow causes destruction and deterioration of the battery. In order to prevent a reverse current flowing from DC bus Bdc to DC power source 1, third switching element Q3 may be fixedly turned off.

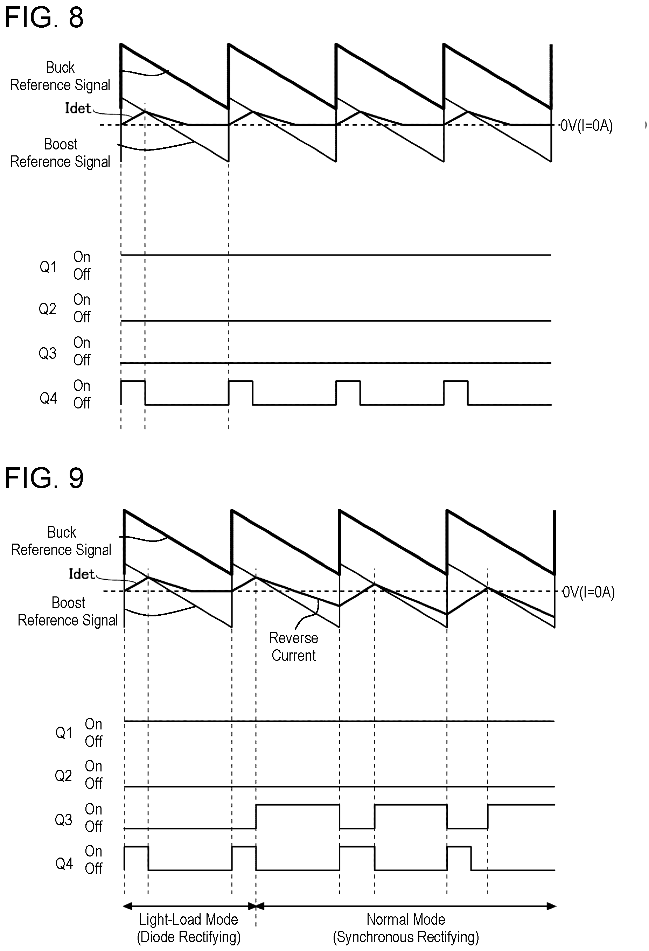

FIG. 8 illustrates a timing chart of current detection value Idet, the buck reference signal, the boost reference signal, gate-source voltages of first witching element Q1 to fourth switching element Q4 when third switching element Q3 is fixedly turned off. The gate-source voltage of third switching element Q3 fixedly at a low level causes third switching element Q3 to be fixedly turned off. Thus, a lower limit of current detection value Idet is clamped to 0 A to prevent a reverse current flowing from DC bus Bdc to DC power source 1.

When third switching element Q3 is fixedly turned off, a current flows from at least one of DC power source 1 and reactor L1 to DC bus BDC via third diode D3 in the transmission state during the buck operation and the boost operation. In the case that third diode D3 is a parasitic diode of MOSFET, when a large current flows through third diode D3, heat generation increases, and the risk of occurrence of smoke or fire arises. When a current passes through third diode D3 (diode rectifying), power loss is greater than that when a current passes through third switching element Q3 turned on (synchronous rectifying), which results in a decrease in conversion efficiency. As the current flowing through third diode D3 is greater, electric power loss generated in third diode D3 is greater.

Therefore, under a heavy load, third switching element Q3 is fixedly turned on to keep synchronous rectification, whereas, under a light load, third switching element Q3 is turned off to switch to diode rectification. For example, a current sensor is provided on the output side of buck-boost DC-DC converter 10 to detect an output current of buck-boost DC-DC converter 10. When the detected output current is determined to be sufficiently low, third switching element Q3 is turned off.

In that control, when the output current subsequently increases and third switching element Q3 is turned on again, the risk of backflow of electric power accumulated in second capacitor C2 to the input side arises. In particular, a reverse current is easily generated if sudden change in load 2 is repeated.

FIG. 9 illustrates a timing chart of current detection value Idet, the buck reference signal, the boost reference signal, gate-source voltages of first switching element Q1 to fourth switching element Q4 when a reverse current is generated during the boost operation. In the example illustrated in FIG. 9, after switching from a light load mode (diode rectifying mode) in which third switching element Q3 is fixedly turned off to a normal mode (synchronous rectifying mode) in which third switching element Q3 operates complementarily with fourth switching element Q4, current detection value Idet becomes negative.

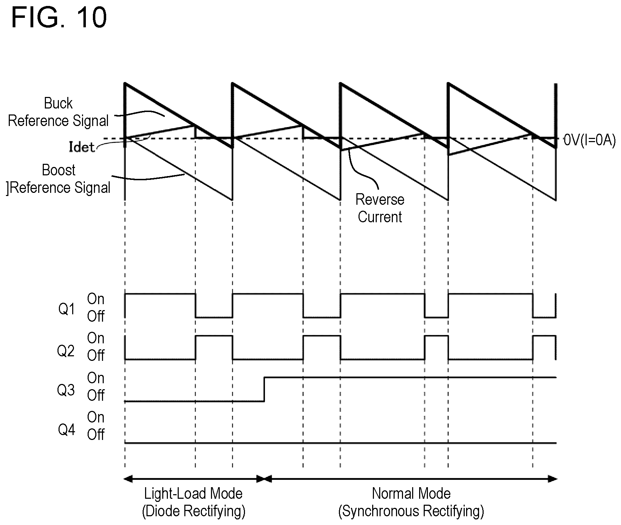

FIG. 10 illustrates a timing chart of current detection value Idet, the buck reference signal, the boost reference signal, gate-source voltages of first switching element Q1 to fourth switching element Q4 when a reverse current is generated during the buck operation. In the example illustrated in FIG. 10 as well, after switching from the light load mode (diode rectifying mode) in which third switching element Q3 is fixedly turned off to a normal mode (synchronous rectifying mode) in which third switching element Q3 is fixedly turned on, current detection value Idet becomes negative.

Therefore, in the present embodiment, controller 20 releases the light load mode and switches to the normal mode if a current having a predetermined value or higher flows through reactor L1.

In the boost or buck operation, when the current detection value Idet is less than a certain value, controller 20 fixedly turns off third switching element Q3 (the light load mode), whereas, when current detection value Idet is the certain value or more, controller 20 causes third switching element Q3 to operate complementarily with fourth switching element Q4 (the normal mode). Based on the results of experiments and simulations performed by the designer, the certain value is predetermined previously to a value that surely prevents backflow.

In the buck operation, when current detection value Idet is less than the certain value, controller 20 fixedly turns off third switching element Q3 and fixedly turns off fourth switching element Q4 (the light load mode), whereas, when current detection value Idet is the certain value or more, controller 20 fixedly turns on third switching element Q3 and fixedly turns off fourth switching element Q4 (the normal mode).

In any of the boost operation, the buck operation, and the buck-boost operation, when third switching element Q3 is turned on and current detection value Idet becomes zero, controller 20 forcibly turns off third switching element Q3.

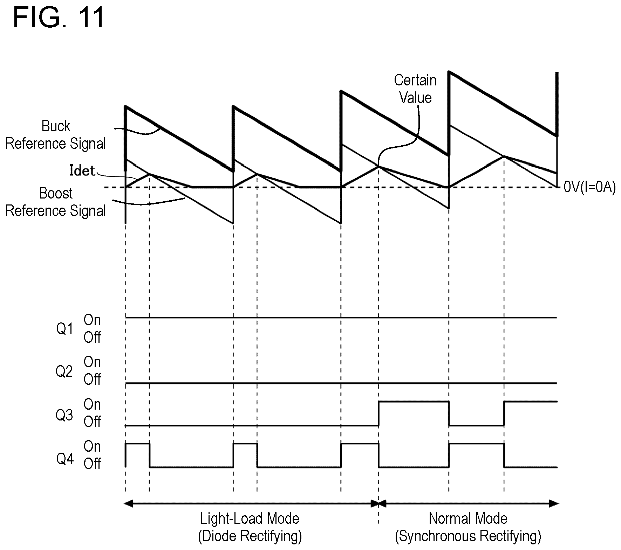

FIG. 11 illustrates a timing chart of current detection value Idet, the buck reference signal, the boost reference signal, gate-source voltages of first switching element Q1 to fourth switching element Q4 when a countermeasure against the generation of reverse currents according to the embodiment is implemented.

If current detection value Idet is the certain value or more, a reverse current from the output side is prevented by releasing the light load mode and switching to the normal mode. The normal mode leads to synchronous rectifying, thereby preventing heat generation and enhancing conversion efficiency.

In the peak current mode, currents flowing from DC power source 1 to reactor L1 are always monitored, and does not necessarily require a particular current sensor for preventing the backflow of currents. Therefore, no additional hardware cost is incurred. In contrast, in the voltage mode, a current sensor is necessarily installed, resulting in additional hardware costs.

As described above, buck-boost DC-DC converter 10 smoothly switches between the boost operation and the buck operation by providing an offset to the boost reference signal and the buck reference signal and providing the certain overlap region. In buck-boost DC-DC converter 10, current detection value Idet may delay with respect to the boost reference signal and the buck reference signal due to a hardware factor. Particularly in digital control, a delay may occur in an A/D converter in a current detection system. In the buck operation, when a heavy load is applied and current detection value Idet delays with respect to the reference signals, the buck operation may be unintentionally and temporarily switched to the boost operation.

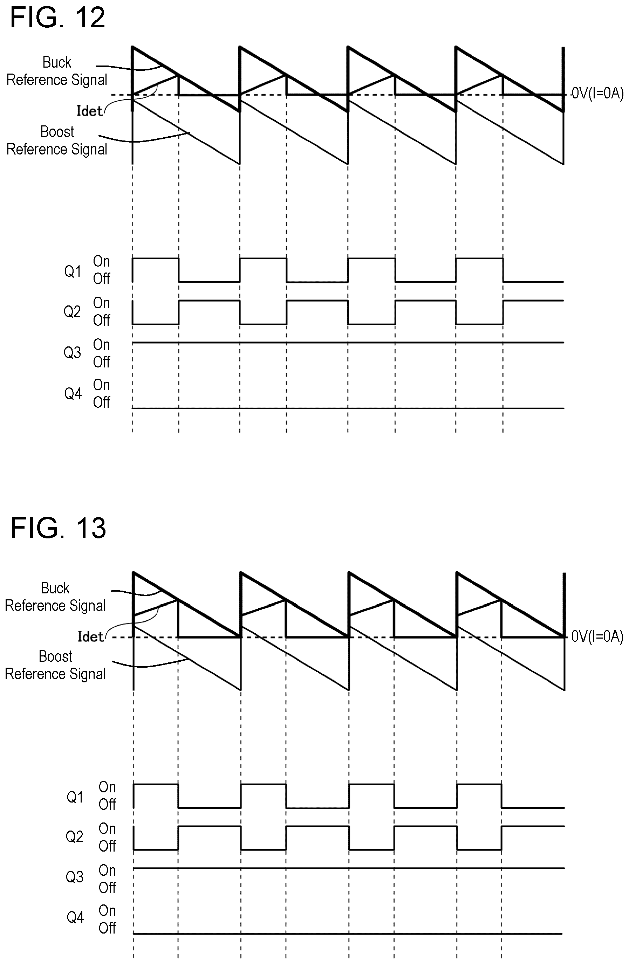

FIG. 12 illustrates a timing chart of current detection value Idet, the buck reference signal, the boost reference signal, gate-source voltages of first switching element Q1 to fourth switching element Q4 when the buck operation is performed at a light load without a delay in current detection value Idet. FIG. 13 illustrates a timing chart of current detection value Idet, the buck reference signal, the boost reference signal, gate-source voltages of first switching element Q1 to fourth switching element Q4 when the buck operation is performed at a heavy load without a delay in current detection value Idet.

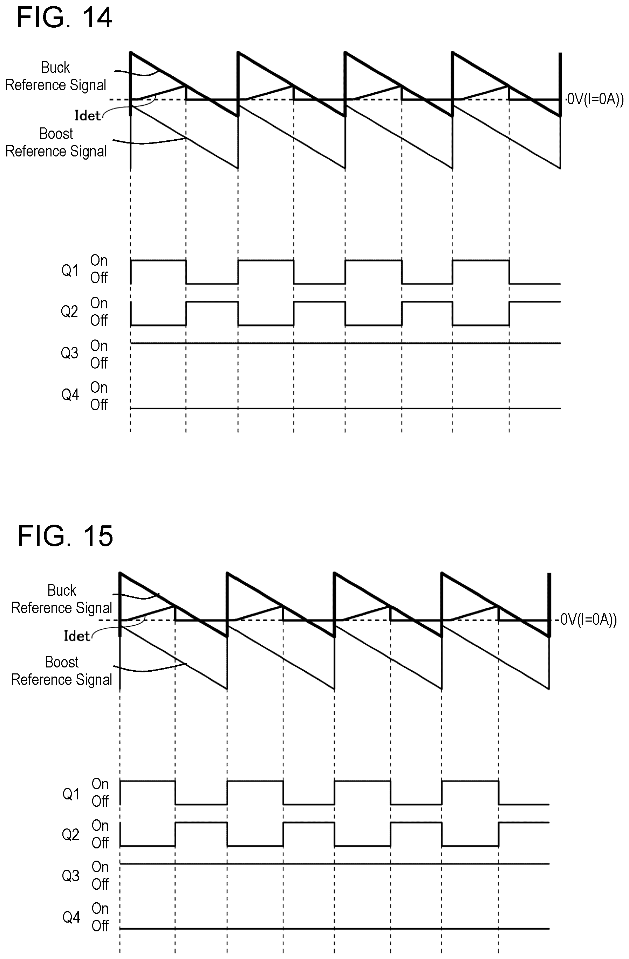

FIG. 14 illustrates a timing chart of current detection value Idet, the buck reference signal, the boost reference signal, gate-source voltages of first switching element Q1 to fourth switching element Q4 when the buck operation is performed at a light load with a delay in current detection value Idet. FIG. 15 illustrates a timing chart of current detection value Idet, the buck reference signal, the boost reference signal, gate-source voltages of first switching element Q1 to fourth switching element Q4 when the buck operation is performed at a heavy load with a delay in current detection value Idet.

As described in FIG. 13, even when a heavy load is applied in a situation that a delay in current detection value Idet does not occur, all of current detection value Idet, the buck reference signal, and the boost reference signal increase while a relative relationship among the current detection value Idet, the buck reference signal, and the boost reference signal is maintained, and therefore the boost operation is not performed. In contrast, as illustrated in FIG. 15, when a heavy load is applied in a situation where a delay in current detection value Idet occurs, current detection value Idet does not increase at the beginning of one switching cycle even when the buck reference signal and the boost reference signal increase. As a result, current detection value Idet falls within the value range of the boost reference signal, and the boost operation is performed. After that, when current detection value Idet exceeds the boost reference signal, the boost operation shifts from the accumulation state to the transmission state. The boost operation at the beginning of one switching cycle is useless switching, which leads to a loss.

Therefore, during the buck operation, a blanking time is provided for the boost operation for a predetermined period of time from the beginning of one switching cycle When a bottom of the value range of the buck reference signal is zero or less and a top of the value range of the boost reference signal is zero or more at the beginning of one switching cycle, controller 20 fixedly turns off fourth switching element Q4 for the predetermined period of time from the beginning of the one switching cycle to disable the boost operation.

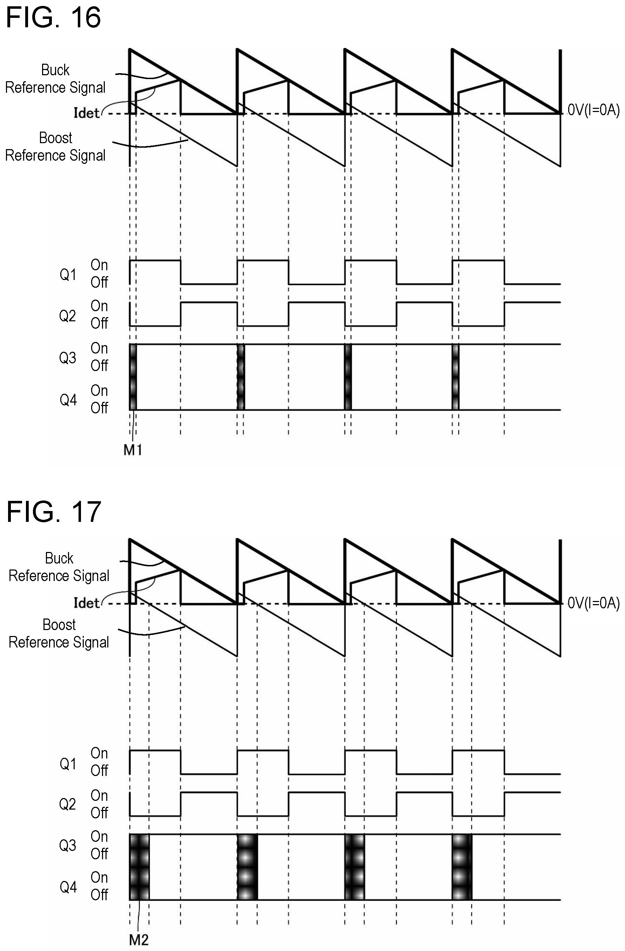

FIG. 16 illustrates a first example of a timing chart of current detection value Idet, the buck reference signal, the boost reference signal, gate-source voltages of first switching element Q1 to fourth switching element Q4 when the top of the value range of the boost reference signal is zero or more. In the first example, when the bottom of the value range of the buck reference signal is zero or less and the top of the value range of the boost reference signal is zero or more at the beginning of one switching cycle, controller 20 fixedly turns off fourth switching element Q4 for a delay time in which a current flowing through reactor L1 is detected, that is, for the above-mentioned predetermined period of time from the beginning of the one switching cycle.

The delay time is referred to as first masking period M1. The designer previously determines the delay time of the current detection system by experiment and simulation and as first masking period M1. When buck-boost control is realized by hardware control, a gate element configured to fix the PWM signal for fourth switching element Q4 at a low level and fix the PWM signal for third switching element Q3 at a high level during first masking period M1 is added to control logic circuitry 29 illustrated in FIG. 3. When the buck-boost control is realized by digital control, the processing of comparison between the PWM signal for fourth switching element Q4 and current detection value Idet is stopped during first masking period M1.

FIG. 17 illustrates a second example of a timing chart of current detection value Idet, the buck reference signal, the boost reference signal, gate-source voltages of first switching element Q1 to fourth switching element Q4 when the top of the value range of the boost reference signal is zero or more during the buck operation. In the second example, when the bottom of the value range of the buck reference signal is zero or less and the top of the value range of the boost reference signal is zero or more at the beginning of one switching cycle, controller 20 fixedly turns off fourth switching element Q4 from the beginning of the one switching cycle until the top of the value range of the boost reference signal becomes less than zero.

A period of time from the beginning of one switching cycle until the top of the value range of the boost reference signal becomes less than zero is referred to as second masking period M2. The second masking period M2 is a variable.

As described above, when the top of the value range of the boost reference signal is zero or more at the beginning of one switching cycle during the buck operation, the boost operation is thus stopped for the predetermined period of time to prevent unintentional switching from the buck operation to the buck operation at the beginning of the one switching cycle. This configuration prevents unnecessary loss during the buck operation.

When first masking period M1 is used, the masking period may be set to a minimum. When second masking period M2 is used, the boost operation may be stopped until the boost reference signal becomes less than zero, thereby surely preventing switching to the buck-boost operation.

The present disclosure has been described, based on the embodiment. Those skilled in the art will understand that the embodiment is merely an example and various modifications can be made to a combination of the constituents and a combination of the processing processes, and such modifications are also included within the scope of the present disclosure.

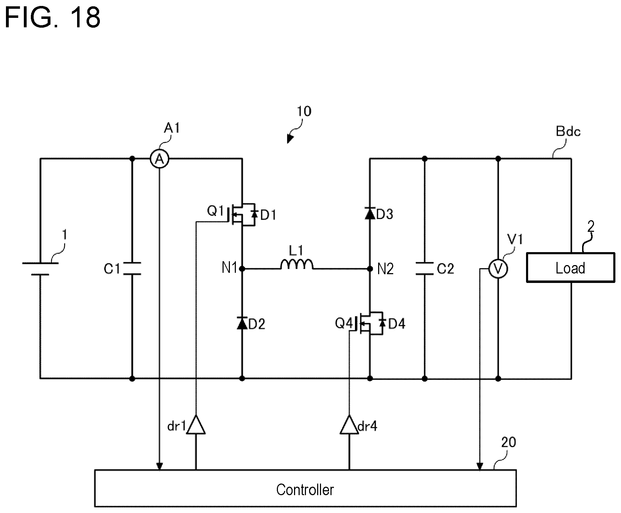

FIG. 18 is a schematic diagram of a buck-boost DC-DC converter according to a modification. When bidirectional operation is not performed, second switching element Q2 may be replaced with second diode D2 serving as a passive element, and third switching element Q3 may be replaced with third diode D3 serving as a passive element.

In the above-described embodiment, an example of CV discharge from a rechargeable battery is assumed. That is, error amplifier 21 amplifies the difference between a reference voltage and an output voltage detected by voltage sensor V1, and generates an error signal to generate a reference signal. In the case of performing CC discharge from the rechargeable battery, a current sensor is provided on the output side of buck-boost DC-DC converter 10. Error amplifier 21 amplifies the difference between a reference voltage corresponding to a target current and the detection value of an output current detected by the current sensor and generates an error signal for generating the reference signal corresponding to the difference. The subsequent processes are the same as those for CV discharge.

The embodiment may be specified by the following items.

### Item 1

A DC-DC converter (10) including:
a first arm configured to be connected in parallel to a direct-current (DC) power source (1), the first arm including a first switching element (Q1) and one of a second switching element (Q2) and a second rectifying element (D2), the first switching element (Q1) being connected to the one of the second switching element (Q2) and the second rectifying element (D2) at a first node (N1);
a second arm configured to be connected in parallel to a DC bus (Bdc) and a smoothing capacitor, the second arm including a third switching element (Q3) and a fourth switching element (Q4) which are connected in series to each other at a second node (N2);
a reactor (L1) connected to the first node (N1) of the first arm and the second node (N2) of the second arm; and
a controller (20) configured to control the first switching element (Q1), the second switching element (Q2), the third switching element (Q3), and the fourth switching element (Q4) or to control the first switching element (Q1), the third switching element (Q3), and the fourth switching element (Q4), wherein
a diode is connected or formed in antiparallel to each of the first switching element (Q1), the second switching element (Q2), the third switching element (Q3), and the fourth switching element (Q4), or to each of the first switching element (Q1), the third switching element (Q3), and the fourth switching element (Q4), and
the controller (20) is configured to:
   generate a boost reference signal with a sawtooth waveform, the boost reference signal being obtained by adding a slope compensation to an error signal corresponding to a difference between a reference value and one of an output voltage or an output current to the DC bus (Bdc); and
   turn on the fourth switching element (Q4) when a current detection value obtained by detecting a current flowing through the reactor (L1) is within a value range of the boost reference signal at beginning of the one switching cycle, and then, turn off the fourth switching element (Q4) when the current detection value becomes equal to the boost reference signal, and control the third switching element (Q3) to
      turn off the third switching element (Q3) fixedly when the current detection value is less than a certain value, and
      cause the third switching element (Q3) to operate complementarily with the fourth switching element (Q4) when the current detection value is equal to or more than the certain value.

This configuration enhances conversion efficiency by performing synchronous rectifying when a current value is equal to or more than the certain value while preventing the backflow during the boost operation.

### Item 2

In a DC-DC converter (10) according to Item 1, the controller (20) is configured to:
generate a buck reference signal with a sawtooth waveform by adding a buck sawtooth wave to the error signal, the buck sawtooth wave being obtained by shifting the boost reference signal upward such that a lower part of the buck sawtooth wave includes a certain overlap region overlapping an upper part of a boost sawtooth wave of the boost reference signal; and
turn on the first switching element (Q1) when the current detection value is within a value range of the buck reference signal and is not within the value range of the boost reference signal at the beginning of the one switching cycle, and then, turn off the first switching element (Q1) when the current detection value becomes equal to the boost reference signal, and control the third switching element (Q3) and the fourth switching element (Q4) to
   turn off the third switching element (Q3) fixedly and turn off the fourth switching element (Q4) fixedly when the current detection value is less than the certain value, and
   turn on third switching element (Q3) fixedly and turn off the fourth switching element (Q4) fixedly when the current detection value is equal to or more than the certain value.

Thus, while preventing the backflow during the buck operation, conversion efficiency is enhanced by performing synchronous rectifying when a current value is equal to or more than the certain value.

### Item 3

In a DC-DC converter (10) according to Item 2, the controller (20) is configured to turn on the first switching element (Q1) and the fourth switching element (Q4) when the current detection value is within the value range of the buck reference signal and within the value range of the boost reference signal at the beginning of the one switching cycle, and then control the first switching element (Q1), the third switching element (Q3), and the fourth switching element (Q4) to
turn off the fourth switching element (Q4) when the current detection value becomes equal to the boost reference signal,
turn off the first switching element (Q1) when the current detection value becomes equal to the buck reference signal,
turn off the third switching element (Q3) fixedly when the current detection value is less than the certain value, and
cause the third switching element (Q3) to operate complementarily with the fourth switching element (Q4) when the current detection value is equal to or more than the certain value.

Thus, while preventing the backflow during the buck-boost operation, conversion efficiency is enhanced by performing synchronous rectifying when a current value is equal to or more than the certain value.

### Item 4

In a DC-DC converter (10) according to any one of Items 1 to 3, the controller (20) is configured to turn off the third switching element (Q3) when the current detection value becomes zero while the third switching element (Q3) is turned on.

Thus, the backflow is surely prevented.

### Item 5

In a DC-DC converter (10) according to any one of Items 1 to 3, the controller (20) is configured to determine the boost reference signal and an amplitude of a sawtooth wave of the buck reference signal such that an amplitude of a sawtooth wave of the boost reference signal and an amplitude of a sawtooth wave of the buck reference signal have different values.

Thus, the range of the overlap region may be arbitrarily adjusted.

### Item 6

In a DC-DC converter (10) according to any one of Items 1 to 3, the controller (20) is configured not to add the slope compensation to one of the boost reference signal and the buck reference signal.

This configuration simplifies a production circuit or production processing for the reference signals.

### REFERENCE MARKS IN THE DRAWINGS

1 DC power source
2 load
10 buck-boost DC-DC converter
20 controller
21 error amplifier
22 boost-side comparator
23 buck-side comparator
24 control logic circuitry
25 buck-side adder
26 boost-side adder
27 buck-side comparator
28 boost-side comparator
29 control logic circuitry
Bdc DC bus
L1 reactor
Q1-Q4 switching element
D1-D4 diode
C1-C2 capacitor
dr1-dr4 driving circuit
A1 current sensor
V1 voltage sensor

## Claims

1. A DC-DC converter comprising:
a first arm configured to be connected in parallel to a direct-current (DC) power source, the first arm including a first switching element and one of a second switching element and a second rectifying element, the first switching element being connected to the one of the second switching element and the second rectifying element at a first node;
a second arm configured to be connected in parallel to a DC bus and a smoothing capacitor, the second arm including a third switching element and a fourth switching element which are connected in series to each other at a second node;
a reactor connected to the first node of the first arm and the second node of the second arm; and
a controller configured to control the first switching element, the second switching element, the third switching element, and the fourth switching element or to control the first switching element, the third switching element, and the fourth switching element, wherein
a diode is connected or formed in antiparallel to each of the first switching element, the second switching element, the third switching element, and the fourth switching element, or to each of the first switching element, the third switching element, and the fourth switching element, and
the controller is configured to:
generate a boost reference signal with a sawtooth waveform, the boost reference signal being obtained by adding a slope compensation to an error signal corresponding to a difference between a reference value and one of an output voltage or an output current to the DC bus; and
turn on the fourth switching element when a current detection value obtained by detecting a current flowing through the reactor is within a value range of the boost reference signal at beginning of the one switching cycle, and then, turn off the fourth switching element when the current detection value becomes equal to the boost reference signal, and control the third switching element to
turn off the third switching element fixedly when the current detection value is less than a certain value, and
cause the third switching element to operate complementarily with the fourth switching element when the current detection value is equal to or more than the certain value.

2. The DC-DC converter according to claim 1, wherein the controller is configured to:
generate a buck reference signal with a sawtooth waveform by adding a buck sawtooth wave to the error signal, the buck sawtooth wave being obtained by shifting the boost reference signal upward such that a lower part of the buck sawtooth wave includes a certain overlap region overlapping an upper part of a boost sawtooth wave of the boost reference signal; and
turn on the first switching element when the current detection value is within a value range of the buck reference signal and is not within the value range of the boost reference signal at the beginning of the one switching cycle, and then, turn off the first switching element when the current detection value becomes equal to the boost reference signal, and control the third switching element and the fourth switching element to
turn off the third switching element fixedly and turn off the fourth switching element fixedly when the current detection value is less than the certain value, and
turn on third switching element fixedly and turn off the fourth switching element fixedly when the current detection value is equal to or more than the certain value.

3. The DC-DC converter according to claim 2, wherein the controller is configured to turn on the first switching element and the fourth switching element when the current detection value is within the value range of the buck reference signal and within the value range of the boost reference signal at the beginning of the one switching cycle, and then control the first switching element, the third switching element, and the fourth switching element to
turn off the fourth switching element when the current detection value becomes equal to the boost reference signal,
turn off the first switching element when the current detection value becomes equal to the buck reference signal,
turn off the third switching element fixedly when the current detection value is less than the certain value, and
cause the third switching element to operate complementarily with the fourth switching element when the current detection value is equal to or more than the certain value.

4. The DC-DC converter according to any one of claims 1 to 3, wherein the controller is configured to turn off the third switching element when the current detection value becomes zero while the third switching element is turned on.

5. The DC-DC converter according to any one of claims 1 to 3, wherein the controller is configured to determine the boost reference signal and an amplitude of a sawtooth wave of the buck reference signal such that an amplitude of a sawtooth wave of the boost reference signal and an amplitude of a sawtooth wave of the buck reference signal have different values.

6. The DC-DC converter according to any one of claims 1 to 3, wherein the controller is configured not to add the slope compensation to one of the boost reference signal and the buck reference signal.
